# EUROPEAN PATENT APPLICATION

(11) **EP 4 275 508 A1**
(43) Date of publication of application: **15.11.2023**
(21) Application number: 22173208.4
(22) Date of filing: 13.05.2022
(51) Int. Cl.: A23C 20/02, A23L 29/269, A23P 30/10

(54) **METHOD FOR PRODUCING A SHAPED FOOD PRODUCT AND ASSOCIATED DEVICE**

(71) Applicant: Züger Frischkäse AG, 9245 Oberbüren (CH)
(72) Inventor: FREY, Heidi, 9205 Waldkirch (CH); KAUFLIN, Simon Emanuel, 8725 Gebertingen (CH); WEISER, Rouven Fabio Joel, 9220 Bischofszell (CH); ZÜGER, Aline Martina, 9246 Niederbüren (CH); ZÜGER, Christoph Edwin, 9246 Niederbüren (CH)
(74) Representative: Kaminski Harmann

(57) **Abstract**

The invention relates to a method for producing a shaped food product, wherein the method comprises the step of preparing a food matrix by mixing a carrier compound with an ion-dependent gelling compound and with a temperature-dependent gelling compound. The method further comprises the steps of providing the food matrix with a temperature that is above a gelling temperature of the temperature-dependent gelling compound and of shaping the food matrix by means of a shaper 3, wherein the shaper 3 provides to bring the food matrix into a desired shape of the food product as a shaped food matrix and wherein the food matrix has during the shaping a temperature that is above the gelling temperature of the temperature-dependent gelling compound. The method further comprises the step of bringing the shaped food matrix into contact with a pre-shaping solution, wherein the pre-shaping solution provides gelling of the ion-dependent gelling compound at least at a surface of the shaped food matrix, wherein the gelling of the ion-dependent gelling compound at the surface of the shaped food matrix provides a layering of the shaped food matrix, wherein the layering stabilizes the shape of the shaped food matrix and provides a layered shaped food matrix.

## Description

### FIELD OF THE INVENTION

The present invention relates to a method for producing a shaped food product, in particular a shaped vegan cheese alternative.

### BACKGROUND OF THE INVENTION

For the production of genuine mozzarella, the used whole milk is first heated to about 35°C and then rennet, preferably calf rennet and/or microbial rennet, is added. This coagulates the milk and produces what is known as curd. By melting, kneading and pulling, an elastic mass is obtained from the curd. To prevent the mozzarella from drying out and spoiling, it is placed in salt water and packaged for sale. In addition to its white color, mozzarella is characterized by its mouldability (e.g. ball, plait), its shape stability (the mozzarella retains its shape for several weeks despite being soaked in salt water) and its meltability (e.g. when gratinating a pizza). Due to the increasing demand for vegan products, especially for vegan cheese alternatives, the food industry is faced with the challenge of producing a vegan mozzarella alternative that has the characteristic properties of mouldability, shape stability and meltability at the same time.

US 2020/0080036 A1 discloses a shelf stable, edible sphere containing alcohol and methods for preparing the same. The edible sphere comprises a liquid and/or gel inner core comprising ethyl alcohol and an outer membrane comprising alginate, wherein the outer membrane coats and encapsulates the liquid and/or gel inner core. The process for preparing the shelf stable, edible sphere comprises combining an alcoholic beverage, a calcium salt, and optionally one or more further components to form a cocktail solution, de-aerating and either freezing the cocktail solution to form a frozen cocktail solution or adding a thickening compound to the de-aerated cocktail solution to form a viscous cocktail solution, immersing the frozen cocktail solution or viscous cocktail solution in a sodium alginate bath at ambient temperature for a period of time to form an edible sphere containing alcohol, and removing the edible sphere containing alcohol from the alginate bath and rinsing it with water to form a shelf stable edible sphere.

WO 02/056713 A1 discloses a process and apparatus for preparing shaped products in which an incipiently gelling liquid based on alginate or low-methoxy pectate aqueous sol is fed onto a moving belt containing cavities of the required shape so as to act as moulds, the liquid is fed onto the belt and the liquid is guided into the cavities in which it is allowed to gel. V-shaped wiper blades can be used as guides. The sol is preferably fed onto the belt at a rate not greater than the volumetric feed rate of the cavities.

Methods according to prior art have the disadvantage that the product of the production method does either not have an entire gelled structure which has a high stability for processing steps such as packaging and transport, or is not meltable.

There is a need to develop a method for producing a shaped food product, in particular a shaped vegan cheese alternative, wherein the shaped food product has a high stability but remains meltable.

### OBJECT OF THE INVENTION

It is therefore an object of the invention to provide a method for producing a shaped food product which is highly stable but meltable.

Another object of the invention is to provide a production line for producing a highly stable but meltable shaped food product.

This object is achieved by realizing at least part of the features of the independent claims. Features which further develop the invention in an alternative or advantageous manner are described in the dependent patent claims.

### SUMMARY OF THE INVENTION

The invention relates to a method for producing a shaped food product, wherein the method comprises the step of preparing a food matrix by mixing a carrier compound with an ion-dependent gelling compound and with a temperature-dependent gelling compound. The method further comprises the steps of providing the food matrix with a temperature that is above a gelling temperature of the temperature-dependent gelling compound and of shaping the food matrix by means of a shaper, wherein the shaper provides to bring the food matrix into a desired (final) shape of the food product as a shaped food matrix and wherein the food matrix has during the shaping a temperature that is above the gelling temperature of the temperature-dependent gelling compound. The method further comprises the step of bringing the shaped food matrix into contact with a pre-shaping solution, wherein the pre-shaping solution provides gelling of the ion-dependent gelling compound at least at a surface of the shaped food matrix, wherein the gelling of the ion-dependent gelling compound at the surface of the shaped food matrix provides a layering of the shaped food matrix, wherein the layering stabilizes the shape of the shaped food matrix and provides a layered shaped food matrix (the desired shape of the shaped food product is predefined and stabilized by an ion-dependent gelling only at the surface of the shaped food matrix).

In context of the present invention a (carrier) compound should be understood to comprise at least one single ingredient or substance, i.e. the carrier compound may consist of one single substance or may comprise more than one ingredient. The same understanding should be applied to the ion-dependent gelling compound and to the temperature-dependent gelling compound. Each of the compounds may comprise one single ingredient or substance which provides the compound-relevant functionality, but may alternatively comprise a plurality of ingredients or substances.

Therefore, besides mixing an already prefabricated carrier compound, ion-dependent gelling compound and temperature-dependent gelling compound, it is also conceivable to mix the individual ingredients of these three compounds together in one step and thus prepare the food matrix. The mixing itself can be done by any method known to the skilled person (e.g. with a stirrer, mixer, by hand, etc.).

By way of example, the three compounds or the individual ingredients can be placed in a colloid mill and finely milled. A temperature controller, in particular a plate heater, comprised in the colloid mill can adjust the compounds or individual ingredients to a desired temperature during the mixing process (for optimal development of the gelling and thickening capacity). This temperature is preferably above the gelling temperature of the temperature-dependent gelling compound, which facilitates mixing. Subsequently, the food matrix can be homogenized in a homogenizer (e.g. a high-pressure homogenizer). During these process steps, the temperature of the respectively processed compound/matrix should not fall below the gelling temperature of the temperature-dependent gelling compound, as otherwise it will gel and further process steps may become impossible or components of processing machines/production lines may become clogged/blocked.

The shaping of the food matrix is facilitated by providing the food matrix with a temperature that is above a gelling temperature of the temperature-dependent gelling compound (e.g. 40 °C - 60 °C) when it is placed in the shaper, and hence the food matrix is, for example, liquid or has a viscosity that enables the shaping of the food matrix.

The layering stabilizes the layered shaped food matrix in such a way that the shape is preserved during further processing, e.g. release/removal from the shaper or transport via an assembly line. The release from the shaper can be achieved, for example, by gravity, which causes the layered shaped food matrix to fall out, or by a fluid (liquid (e.g. water) or gaseous (e.g. air)) jet, which presses the layered shaped food matrix out of the shaper by means of the pressure of the fluid jet. The pressure of the fluid jet has to be adjusted in such a way that it does not damage the shape of the layered shaped food matrix as the inside/the core of the layered shaped food matrix (e.g. sphere) is still liquid/viscous (has not entirely gelled yet) during this process step as its temperature is still above the gelling temperature of the temperature-dependent gelling compound.

In the context of the present invention, a layer/layering should be understood as a layer that is formed around the shaped food matrix and differs in its physical properties (for example, melting temperature, toughness, strain at break) and/or its chemical composition (for example, ionically crosslinked or non-crosslinked polysaccharide chains) from the material of the shaped food matrix underneath the layer. The layer is formed (for example through a cross-linking reaction on the surface of the shaped food matrix) out of the entire mass of the shaped food matrix and is not pulled over/applied onto the shaped food matrix as in the case of a coating. Other terms which can be used instead of layer/layering are: covering, wrapping or enveloping.

In a further embodiment, the shaped food product is a shaped vegan food product, in particular a shaped vegan cheese alternative.

In a further embodiment, the layered shaped food matrix is entirely gelled (in addition to the gelling of the ion-dependent gelling compound at least at a surface of the shaped food matrix the inside/the core of the layered shaped food matrix is gelled) by providing the layered shaped food matrix at a temperature that is below the gelling temperature of the temperature-dependent gelling compound (e.g. 4 °C - 40 °C). Entire/complete gelling of the temperature-dependent gelling compound of the layered shaped food matrix provides the shaped food product.

Due to the layered structure of the layered shaped food matrix with an ion-dependent gelled surface and a temperature-dependent inside/core (the inside/core is liquid at a temperature above the gelling temperature of the temperature-dependent gelling compound and gelled at a temperature below the gelling temperature of the temperature-dependent gelling compound), on the one hand, a high stability of the shaped food product for further processing steps such as packaging and transport is ensured in case of an entirely gelled inside/core and, on the other hand, the meltability of the shaped food product is maintained upon heating above the gelling temperature of the temperature-dependent gelling compound.

In a further embodiment, the food matrix has during the mixing a temperature that is above the gelling temperature of the temperature-dependent gelling compound. This reduces the viscosity of the temperature-dependent gelling compound and thus also the viscosity of the food matrix, enabling homogeneous mixing without clumping/agglomeration.

In a further embodiment, the pre-shaping solution has a temperature that is below the gelling temperature of the temperature-dependent gelling compound. In this manner, the temperature-dependent gelling compound begins to gel or at least becomes more viscous, which gives the layered shaped food matrix additional stability for further processing.

In a further embodiment, the method further comprises the step of bringing the layered shaped food matrix into contact with a curing solution, wherein the curing solution has a temperature that is below the gelling temperature of the temperature dependent gelling compound.

In a further embodiment, a contact time of the layered shaped food matrix with the curing solution has a duration in which the temperature dependent gelling compound is entirely gelled at the temperature of the curing solution and the entire gelling of the temperature-dependent gelling compound of the layered shaped food matrix provides the shaped food product.

For example, the contact of the layered shaped food matrix with the curing solution can be provided in a special basin or in the packaging of the shaped food product. Especially with regard to a vegan cheese alternative, in particular a vegan mozzarella, which is usually packaged in a brine, it would be conceivable to package the layered shaped food matrix together with the curing solution, in which case the finished shaped food product is only formed in the packaging, e.g. during storage in the refrigerator/refrigerated shelf.

In a further embodiment, the ion-dependent gelling compound comprises at least one polysaccharide (this does not refer to the number of polysaccharide molecules itself but to the number of species/types of polysaccharides) and the pre-shaping solution comprises at least one cation (this does not refer to the number of cations itself but to the number of species/types of cations), and/or the ion-dependent gelling compound comprises at least one cation and the pre-shaping solution comprises at least one polysaccharide, wherein the at least one cation reacts with the at least one polysaccharide and provides gelling of the ion-dependent gelling compound at the surface of the shaped food matrix.

In a further embodiment, the at least one polysaccharide is alginate, pectin or carrageenan.

In a further embodiment, the at least one cation is a metal cation, in particular a metal cation of the metals calcium, magnesium, iron or zinc.

In a further embodiment, the temperature-dependent gelling compound comprises at least one biopolymer, in particular wherein the at least one biopolymer is agar, microbial gum, gellan gum, carrageenan, furcelleran or gelatin.

In a further embodiment, the carrier compound comprises water, in particular deionized water, vegetable oil, nut, cereal flour or salt.

In a further embodiment, it can be advantageous that the carrier compound contains deionized water, as this prevents cross-linking of the ion-dependent gelling compound by calcium or magnesium ions contained in tap water, for example. Such a cross-linking of the ion-dependent gelling compound is thermoirreversible and makes it impossible to melt the shaped food product at a later stage. However, especially in the field of vegan cheese alternatives, it is desirable that the cheese alternative melts upon heating (e.g. gratinating a pizza) in order to imitate the behaviour of genuine cheese.

In other words and by way of example, the thermoreversible gelling capacity (e.g. of agar) is combined with the thermoirreversible instantaneous gelling capacity of alginate with calcium ions. The mixture (containing agar and alginate) is formed in a mould (e.g. into balls) and brought into contact with a cold (e.g. 4 °C) aqueous solution containing calcium ions (e.g. 0.5 wt.-% CaCl₂) for a certain time (e.g. 30 min). The calcium ions in the water react with the alginate in the mixture providing immediate stability of the ball surface, so that the mixture is formable/mouldable despite the still non-gelled agar. The inside of the balls becomes solid by the gelling of the agar as the mixture is cooled. The result is a continuously producible meltable ball-shaped food product.

The invention further relates to a production line for producing a shaped food product, in particular a shaped vegan cheese alternative, the production line comprises a filling unit and a shaper. The shaper is arranged below an outlet of the filling unit, wherein the outlet is configured to provide a food product filled into the filling unit to the shaper at a filling area, and is configured as a cylinder, wherein the cylinder has a base plane and a lateral surface and is rotatable around a rotation axis, wherein the rotation axis is perpendicular to the base plane and extends through the midpoint of the base plane. The lateral surface of the cylinder comprises at least one mould, wherein the at least one mould is configured to provide the food product in a desired (final) shape. The production line further comprises a pre-shaping basin, wherein a volume of the pre-shaping basin is delimited on a cylinder side by a pre-shaping basin portion of the lateral surface, wherein the pre-shaping basin portion of the lateral surface rotationally extends over an angular region of at least 45° to 135°, wherein an angle of 0° is defined by a vector extending vertically downwards and being perpendicular to the rotation axis.

The at least one mould can have different forms/geometrical dimensions in order to obtain the shaped food product in different shapes. For example, hemispherical, star-shaped, cuboid-shaped, etc. moulds are conceivable.

For example, the filling unit can be configured as a filling funnel, as a downpipe or as at least one hose directed precisely at the moulds.

In a further embodiment, the production line further comprises at least one fluid nozzle, wherein the at least one fluid nozzle is configured to direct at least one fluid jet towards the lateral surface of the cylinder, in particular wherein the at least one fluid jet provides such a fluid pressure on the lateral surface of the cylinder that the shaped food product is released from the at least one mould. The applied fluid may comprise or consist of (demineralized/deionized) water.

In a further embodiment, the production line further comprises a curing basin.

In a further embodiment, the curing basin is located on a first side of the cylinder and the pre-shaping basin is located on a second side of the cylinder, wherein a vertical plane separates the first side from a second side, the vertical plane comprises (i.e. the rotation axis lies in the vertical plane) or is parallel to the rotation axis. In particular, the first side is opposite to the second side and the vertical plane is oriented vertically.

In a further embodiment, the curing basin is located below the cylinder and is configured so that a curing solution can be provided in the curing basin without or with little contact with the cylinder. By providing such non-contact or moderate contact with the cylinder falling out the shaped food product of the mould is provided due to avoiding significant counter-pressure by the curing solution.

In a further embodiment, the production line further comprises a mill, in particular a colloid mill, and a homogenizer, in particular a high-pressure homogenizer, wherein the mill is configured for grinding and mixing components for a precursor mass of the food product and wherein the homogenizer is configured to provide the precursor mass as a homogeneous mass.

In a further embodiment, the production line further comprises at least one temperature controller, in particular heater, wherein the at least one temperature controller is attached to the filling unit, and/or the shaper, and/or the pre-shaping basin, and/or the at least one fluid nozzle, and/or the curing basin, wherein by means of the at least one temperature controller a temperature of a corresponding component of the production line can be controlled and thus also a temperature of the food product and/or a liquid contained in the corresponding component can be controlled.

In a further embodiment, the production line further comprises a control unit, wherein the control unit is configured to carry out the method according to claims 1 to 9.

In a further embodiment, the method is carried-out by means of the production line of claims 10 to 13.

### BRIEF DESCRIPTION OF THE DRAWINGS

The invention is illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
Figure 1 shows a schematic illustration of the production line from the side.
Figure 2 shows a schematic illustration of the production line from above.
Figure 3 shows a schematic illustration of the shaper, the pre-shaping basin portion and the curing basin.

### DETAILED DESCRIPTION OF THE DRAWINGS

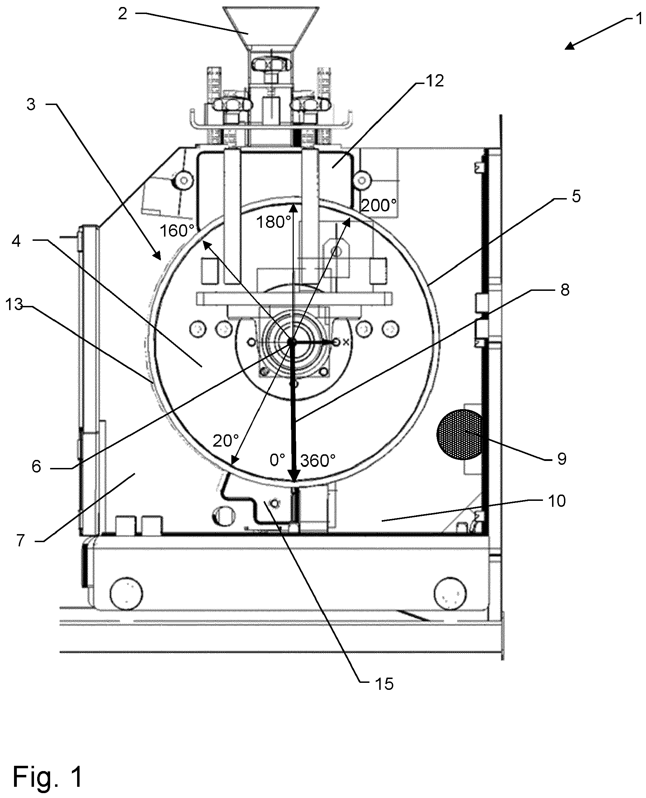

**Figure 1** shows a schematic illustration of the production line 1 from the side, which comprises the filling unit 2 configured as filling funnel and the shaper 3, wherein the shaper 3 is arranged below an outlet of the filling funnel 2 and is configured as a cylinder. The cylinder has the base plane 4 and the lateral surface 5 and is rotatable around the rotation axis 6, wherein the rotation axis 6 is perpendicular to the base plane 4 and extends through the midpoint of the base plane 4. Further, the production line 1 comprises the pre-shaping basin 7, wherein the volume of the pre-shaping basin 7 is delimited on a cylinder side by the pre-shaping basin portion 13 of the lateral surface, wherein - according to the invention - the pre-shaping basin portion 13 of the lateral surface rotationally extends over the angular region of at least 45° to 135°. According to the embodiment shown in Figure 1, the pre-shaping basin portion 13 extends over the larger angular region of 20° to 160°, wherein the angle of 0° is defined by a vector 8 extending vertically downwards and being perpendicular to the rotation axis 6 (for illustration purposes, the angles 0°, 20°, 160°, 180°, 200° and 360° are shown in Figure 1). The volume of the pre-shaping basin 7 is further delimited by the seal 15 in the angular region of 0° to 20° of the pre-shaping basin portion 13.

In other words, the side view of the plant 1 is visualized, wherein the cylindrical demolding drum 3 is seen from the side with the filling hopper 2 above it.

In the following description of the Figures 1 to 3, the production line 1 is used by way of example to produce a shaped food product according to claims 1 to 9.

For the steps of filling the food matrix into the filling funnel 2 and shaping the food matrix, it is advantageous that the temperature of the food matrix is above the gelling temperature of the temperature-dependent gelling compound, as this ensures that the temperature-dependent gelling compound is not gelled and the viscosity of the food matrix is reduced to such an extent that it can flow onto the shaper 3 and into the moulds and can be shaped in the moulds without any difficulties.

The lateral surface forms a pre-shaping basin portion 13 in the angular region/range of 20° to 160° (the lateral surface of the cylinder forms a part of the side wall of the pre-shaping basin 7, thus defining the volume of the pre-shaping basin 7).

By rotating the cylinder (shaper 3) counterclockwise around the rotation axis 6 (this rotation direction is the physical rotation of the cylinder and not the geometric definition of the angle 0° and the other angular regions), the lateral surface and thus also the moulds filled with the food matrix move towards the pre-shaping basin 7, in which the pre-shaping solution is contained. Since the lateral surface forms the pre-shaping basin portion 13 in the angular region of 20° to 160°, the moulds filled with the food matrix (at their opening/at the interface between food matrix and air) are brought into contact with the pre-shaping solution by the rotation of the cylinder (they are immersed in the pre-shaping solution/an interface is formed between food matrix and pre-shaping solution).

Due to the contact of the shaped food matrix, in particular the ion-dependent gelling compound in the shaped food matrix, with the pre-shaping solution, a cross-linking reaction/gelling of the ion-dependent gelling compound at the mould opening/at the interface between the shaped food matrix and the pre-shaping solution is started, wherein the gelling of the ion-dependent gelling compound at the surface of the shaped food matrix results in a layering of the shaped food matrix, wherein the layering stabilizes the shape of the shaped food matrix yielding a layered shaped food matrix.

The pre-shaping solution may also flow into the mould, e.g. into a gap which may be provided between the shaped food matrix and the inner wall of the mould. By that, gelling may be provided over the entire surface of the shaped food matrix.

In addition, it is conceivable to configure the cylinder as a hollow cylinder, wherein the inside of the cylinder/cavity in the cylinder can be filled with the pre-shaping solution. The pre-shaping solution can be flowed/pumped into the moulds through internal openings/holes in the moulds, which create a connection between the moulds and the cavity in the cylinder, wherein the gelling of the ion-dependent gelling compound can be achieved from the side of the moulds located at the internal opening. In this way, the shaped food matrix in the moulds can be completely covered/enclosed with the pre-shaping solution and thus a gelling of the ion-dependent gelling compound on the entire surface of the shaped food matrix can be achieved, resulting in an entirely layered shaped food matrix.

By way of example, the ion-dependent gelling compound comprises a polysaccharide which contains negatively charged acid groups and the pre-shaping solution comprises a cation, in particular a multivalent metal cation, wherein the acid groups of the polysaccharide complex the multivalent metal cation and thus form a thermoirreversible polysaccharide network as a layer on the surface of the shaped food matrix (interface between shaped food matrix and pre-shaping solution). The cross-linking reaction takes place so fast that the layer is formed before the shaped food matrix can flow out of the mould again due to gravity or the centripetal force resulting from the further rotation of the cylinder (the layered shaped food matrix maintains its shape during further rotation of the cylinder, even when the moulds have emerged from the pre-shaping solution and again have an interface with the air.

It is also conceivable that the ion-dependent gelling compound contains the cation and the pre-shaping solution contains the polysaccharide.

In other words, the still hot and liquid food matrix comes into contact with cold shaping brine (approx. 4 °C) directly after filling into the moulds (spherical form) of the shaping drum (shaper/cylinder). This leads to instant/immediate gelling directly on the surface of the sphere. The drum continues to rotate and the surface of the sphere is constantly in contact with the cold brine and thus also in contact with the metal salt contained in the brine. The instant gelling on the surface of the sphere prevents the mould from leaking even though the temperature-dependent gelling compound has not yet gelled.

By way of example, the pre-shaping solution has a temperature that is below the gelling temperature of the temperature-dependent gelling compound. Hence, when the shaped food matrix is immersed in the pre-shaping solution, in addition to the cross-linking of the ion-dependent gelling compound, the gelling of the temperature-dependent gelling compound also takes place, which gives the shaped food matrix additional structural stability (increases the viscosity of the shaped food matrix).

The production line 1 further comprises the fluid nozzle 9, wherein the fluid nozzle 9 is configured to direct ten to fifteen liquid jets towards the lateral surface 5 of the cylinder, and the curing basin 10, wherein the curing basin 10 is located on a first side (in this example on the right side) of the cylinder and the pre-shaping basin 7 is located on a second side (in this example on the left side) of the cylinder, wherein a vertical plane separates the first side from a second side. Here, the vertical plane comprises the rotation axis 6.

The liquid jets are directed towards the lateral surface of the cylinder and have such a high pressure that the liquid jets press the layered shaped food matrix out of the respective mould so that the layered shaped food matrix falls into the curing basin 10 where it is immersed in the curing solution (the layered shaped food matrix is exposed to air for a short time when it falls out, because the curing basin 10 is located below the cylinder and the curing solution is provided in the curing basin 10 without contact with the cylinder). The curing solution has, for example, a temperature that is below the gelling temperature of the temperature-dependent gelling compound.

The layer (and the gelling of the temperature-dependent gelling compound) stabilizes the layered shaped food matrix in such a way that the shape of the layered shaped food matrix is maintained despite the impact of the liquid jet as well as the release from the mould and the subsequent immersion in the curing solution (i.e. the layer is stable enough and does not crack during these process steps, which prevents the food matrix from leaking/flowing out due to the not yet entirely gelled temperature-dependent gelling compound).

In order to ensure that the layered shaped food matrix (sphere/ball) is released from the mould on the lateral surface 5 of the cylinder at a rotation angle of approx. 300° (on the other side of the drum/cylinder), it is advantageous that at this position the drum/cylinder is no longer immerged in a solution but instead is out in air, so that the layered shaped food matrix (sphere/ball) is not pressed into the drum/mould by any liquid.

The layered shaped food matrix has a contact time duration with the curing solution in which the temperature dependent gelling compound is entirely gelled at the temperature of the curing solution which provides the shaped food product.

The contact time duration with the curing solution in which the temperature-dependent gelling compound is entirely gelled can be realized in various ways, wherein the ways listed below are merely exemplary and further ways are conceivable. For example, the layered shaped food matrix can remain in the curing basin after it has been immersed in the curing solution and can be removed and packed manually after the corresponding contact time duration. However, it is also conceivable to design the curing basin as an elongated basin, wherein either a conveyor belt or a continuous flow of the curing solution transports/conveys the layered shaped food matrix to an end/outlet of the basin. The conveying/flow speed can be adjusted in such a way that at the end/outlet of the basin the contact time duration with the curing solution in which the temperature-dependent gelling compound is entirely gelled is reached and the shaped food product can be removed from the elongated basin. In this way, a continuous production process of the shaped food product is enabled.

In another example, the layered shaped food matrix can be packaged directly after release from the mould, wherein the curing solution is inside the packaging and thus the contact time duration with the curing solution in which the temperature dependent gelling compound is entirely gelled is achieved. In this way, the shape of the shaped food product can first be stabilized in a first process step and the curing and thus the final formation of the shaped food product can take place in a second process step after packaging.

Due to the fact that the contact time of the shaped food matrix with the pre-shaping solution is time-limited (e.g. by the rotation of the cylinder the moulds are immersed in the pre-shaping solution and emerge after a desired immersion time based on the rotation speed of the cylinder), the gelling of the ion-dependent gelling compound only takes place on the surface of the shaped food compound (interface between shaped food matrix and pre-shaping solution). Therefore, in the inside/core of the layered shaped food matrix, only the temperature-dependent gelling compound is gelling, which is why the shaped food product can be melted when heated above the gelling temperature of the temperature-dependent gelling compound.

In this context, it can be advantageous that deionized water is used for the production of the carrier compound and the curing solution, as otherwise (due to the magnesium and calcium cations contained in tap water) the cross-linking reaction of the ion-dependent gelling compound can take place up into the depth (up to the inner core) of the shaped food product, thus making it impossible for the shaped food product to melt.

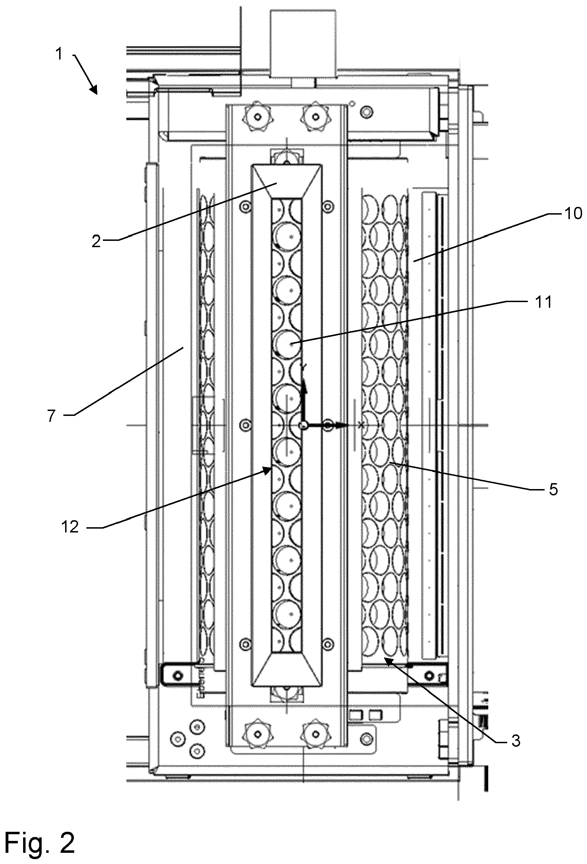

**Figure 2** shows a schematic illustration of the production line 1 from above, which comprises the filling unit 2 configured as filling funnel and the shaper 3, wherein the shaper 3 is arranged below an outlet of the filling funnel 2 and is configured as a cylinder. The lateral surface 5 of the cylinder comprises moulds 11, wherein the moulds 11 are configured to provide the food product in a spherical shape. Further, the pre-shaping basin 7 as well as the curing basin 10 are shown.

In other words, the filling hopper 2 is shown from above, the cylindrical forming drum 3 to be filled below has depressions 11 for forming the compound. The area of the pre-shaping solution 7 can be seen on the left, the area of the curing solution 10 can be seen on the right.

The food matrix is filled into the filling funnel 2 and is transported onto the filling area 12 of the shaper 3 (flows onto the shaper 3 in the filling area 12). The shape and size of the filling area 12 can be rectangular as shown in Figure 2 and extend almost over the entire length of the shaper 3, but any other conceivable shape and size of the filling area 12 is possible, up to a circular area with a diameter of a few centimetres. In this filling area 12, the food matrix flows into the moulds 11, which are arranged on the lateral surface 5 of the cylinder, and takes on the spherical shape determined by the moulds 11.

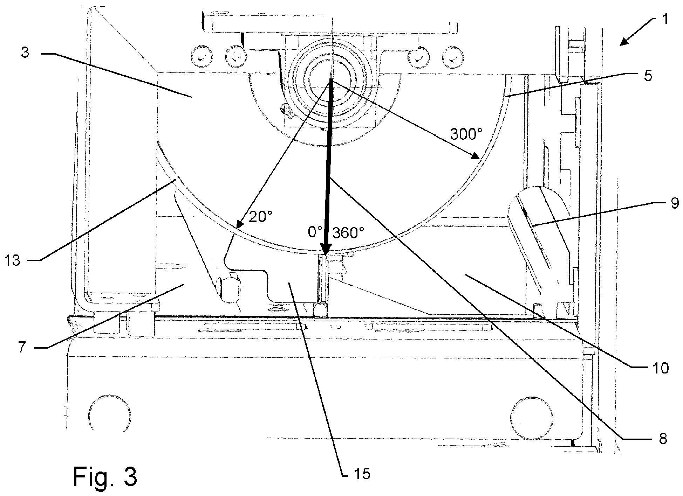

**Figure 3** shows a schematic illustration of the shaper 3, the pre-shaping basin portion 13 and the curing basin 10. The pre-shaping basin portion 13 delimits the volume of the pre-shaping basin 7 over an angular region of 20° to 160° relative to the vector 8 which defines the angle 0°. The curing basin 10 is located on a first (right) side of the cylinder and the pre-shaping basin 7 is located on a second (left) side of the cylinder, wherein a vertical plane separates the first side from a second side. The rotation axis is in the vertical plane. The curing basin 10 is located below the cylinder and is configured so that the curing solution is provided in the curing basin 10 without contact with the cylinder. Figure 3 further shows the fluid nozzle 9 which is configured to direct ten to fifteen liquid jets towards the lateral surface 5 of the cylinder, providing a liquid pressure which releases the layered shaped food matrix from the mould 11 into the curing basin 10.

In other words, the illustration shows the seal 15 between the demolding drum 3 and the base, which allows pre-shaping solution to protrude. In addition, a spray nozzle 9 is illustrated on the right. Its water jet releases the layered shaped food product from the demolding drum 3, which then falls into the curing brine.

Although the invention is illustrated above, partly with reference to some preferred embodiments, it must be understood that numerous modifications and combinations of different features of the embodiments can be made. All of these modifications lie within the scope of the appended claims.

## Claims

1. Method for producing a shaped food product, wherein the method comprises the following steps:
• preparing a food matrix by mixing:
• a carrier compound with
• an ion-dependent gelling compound and with
• a temperature-dependent gelling compound,
• providing the food matrix with a temperature that is above a gelling temperature of the temperature-dependent gelling compound,
• shaping the food matrix by means of a shaper (3), wherein the shaper (3) provides to bring the food matrix into a desired shape of the food product as a shaped food matrix,
wherein the food matrix has during the shaping a temperature that is above the gelling temperature of the temperature-dependent gelling compound,
• bringing the shaped food matrix into contact with a pre-shaping solution, wherein the pre-shaping solution provides gelling of the ion-dependent gelling compound at least at a surface of the shaped food matrix,
wherein the gelling of the ion-dependent gelling compound at the surface of the shaped food matrix provides a layering of the shaped food matrix, wherein the layering stabilizes the shape of the shaped food matrix and provides a layered shaped food matrix.

2. Method according to claim 1, wherein the layered shaped food matrix is entirely gelled by providing the layered shaped food matrix at a temperature that is below the gelling temperature of the temperature-dependent gelling compound.

3. Method according to claim 1 or 2, wherein the food matrix has during the mixing a temperature that is above the gelling temperature of the temperature-dependent gelling compound.

4. Method according to one of the claims 1 to 3, wherein the pre-shaping solution has a temperature that is below the gelling temperature of the temperature-dependent gelling compound.

5. Method according to one of the claims 1 to 4, further comprising the step:
• bringing the layered shaped food matrix into contact with a curing solution,
wherein the curing solution has a temperature that is below the gelling temperature of the temperature dependent gelling compound.

6. Method according to claim 5, wherein
• a contact time of the layered shaped food matrix with the curing solution has a duration in which the temperature dependent gelling compound is entirely gelled at the temperature of the curing solution,
• the entire gelling of the temperature-dependent gelling compound of the layered shaped food matrix provides the shaped food product.

7. Method according to one of the claims 1 to 6, wherein
• the ion-dependent gelling compound comprises at least one polysaccharide and the pre-shaping solution comprises at least one cation, and/or
• the ion-dependent gelling compound comprises at least one cation and the pre-shaping solution comprises at least one polysaccharide,
wherein the at least one cation reacts with the at least one polysaccharide and provides gelling of the ion-dependent gelling compound at the surface of the shaped food matrix.

8. Method according to claim 7, wherein
• the at least one polysaccharide is alginate, pectin or carrageenan,
• the at least one cation is a metal cation, in particular a metal cation of the metals calcium, magnesium, iron or zinc.

9. Method according to one of the claims 1 to 8, wherein the temperature-dependent gelling compound comprises at least one biopolymer, in particular wherein the at least one biopolymer is agar, microbial gum, gellan gum, carrageenan, furcelleran or gelatin.

10. Production line (1) for producing a shaped food product, in particular a shaped vegan cheese alternative, the production line (1) comprises:
• a filling unit (2),
• a shaper (3), wherein the shaper (3)
• is arranged below an outlet of the filling unit (2), wherein the outlet is configured to provide a food product filled into the filling unit (2) to the shaper (3) at a filling area (12),
• is configured as a cylinder, wherein the cylinder
• has a base plane (4) and a lateral surface (5), and
• is rotatable around a rotation axis (6), wherein the rotation axis (6) is perpendicular to the base plane (4) and extends through the midpoint of the base plane (4),
wherein the lateral surface (5) of the cylinder comprises at least one mould (11), wherein the at least one mould (11) is configured to provide the food product in a desired shape,
• a pre-shaping basin (7), wherein a volume of the pre-shaping basin (7) is delimited on a cylinder side by a pre-shaping basin portion (13) of the lateral surface (5), wherein the pre-shaping basin portion (13) of the lateral surface (5) rotationally extends over an angular region of at least 45° to 135°, wherein an angle of 0° is defined by a vector (8) extending vertically downwards and being perpendicular to the rotation axis (6).

11. Production line (1) according to claim 10, wherein the production line (1) further comprises at least one fluid nozzle (9), wherein the at least one fluid nozzle (9) is configured to direct at least one fluid jet towards the lateral surface (5) of the cylinder, in particular wherein the at least one fluid jet provides such a fluid pressure on the lateral surface (5) of the cylinder that the shaped food product is released from the at least one mould (11).

12. Production line (1) according to claim 10 or 11, wherein the production line (1) further comprises a curing basin (10).

13. Production line according to claim 12, wherein the curing basin (10) is located on a first side of the cylinder and the pre-shaping basin (7) is located on a second side of the cylinder, wherein a vertical plane separates the first side from a second side, the vertical plane comprises or is parallel to the rotation axis (6).

14. Production line according to one of the claims 10 to 13, wherein the production line further comprises a control unit, wherein the control unit is configured to carry out the method according to claims 1 to 9.

15. Method according to claim 1, wherein the method is carried-out by means of the production line of claims 10 to 13.
